# EUROPÄISCHE PATENTSCHRIFT

(11) **EP 3 590 052 B1**
(45) Veröffentlichungstag und Bekanntmachung des Hinweises auf die Patenterteilung: **19.05.2021**
(21) Anmeldenummer: 18706280.7
(22) Anmeldetag: 26.02.2018
(51) Int. Cl.: G06F 16/28, G06F 16/33, G06F 16/35, G06K 9/62, G06N 20/20, G06N 99/00

(54) **VERFAHREN ZUM KLASSIFIZIEREN VON INFORMATION UND KLASSIFIZIERUNGSPROZESSOR**
METHOD FOR CLASSIFYING INFORMATION AND CLASSIFICATION PROCESSOR
PROCÉDÉ DE CLASSIFICATION D'INFORMATIONS ET PROCESSEUR DE CLASSIFICATION

(30) Priorität: 28.02.2017 EP 17158525
(43) Veröffentlichungstag der Anmeldung: 08.01.2020
(73) Patentinhaber: Fraunhofer-Gesellschaft zur Förderung der angewandten Forschung e.V., 80686 München (DE)
(72) Erfinder: BENNDORF, Gesa, 79110 Freiburg (DE); RÉHAULT, Nicolas, 79110 Freiburg (DE); RIST, Tim, 79110 Freiburg (DE)
(74) Vertreter: Schlenker, Julian
(86) Internationale Anmeldenummer: PCT/EP2018/054709
(87) Internationale Veröffentlichungsnummer: WO 2018/158201

(56) Entgegenhaltungen:
- FUQAING LIU ET AL: "Dual Teaching: A Practical Semi-supervised Wrapper Method", ARXIV.ORG, CORNELL UNIVERSITY LIBRARY, ITHACA, NY, US, 12. November 2016 (2016-11-12), Seiten 1-8, XP080731271,

## Beschreibung

Ausführungsbeispiele der vorliegenden Erfindung beziehen sich auf ein Verfahren zum Klassifizieren von Information. Weitere Ausführungsbeispiele beziehen sich auf einen Klassifizierungsprozessor zum Klassifizieren von Information. Manche Ausführungsbeispiele beziehen sich auf ein Verfahren zur Fehlererkennung.

Auf vielen Anwendungsfeldern gilt es, Daten korrekt zu Klassifizieren und somit beispielsweise Spam (im E-Mail-Verkehr), bösartige Tumore (Krebs-Diagnostik) oder fehlerhafte Betriebszustände (technische Anlage) automatisiert zu identifizieren und von "normalen Daten" zu unterscheiden. Die technische Herausforderung besteht darin, eine Methode zu finden, die eine solche Klassifizierung möglichst genau vornimmt, d.h. möglichst alle Fehler als solche identifiziert wobei möglichst wenige fälschlicherweise als Fehler klassifiziert werden sollten. Zusätzlich besteht die Schwierigkeit darin, dass die Rahmenbedingungen sich ändern können, vorher unbekannte Fehler auftreten können und die Methode somit im Laufe der Verwendung entsprechend angepasst werden muss.

Prinzipiell gibt es die Möglichkeit, eine solche Klassifizierung mit Hilfe von Expertenwissen oder mittels Methoden aus dem maschinellen Lernen durchzuführen. Dabei hat jede Methode für sich genommen bestimmte Grenzen und Nachteile. Insbesondere benötigen Methoden des maschinellen Lernens generell eine große Menge an qualitativ hochwertigen Trainingsdaten, während Experten-Systeme aufwändig in der Implementierung und wenig flexibel sind.

In der Literatur ist die Theorie von Klassifikationsmethoden wie Support Vector Machine (dt. Stützvektormaschine), Logistische Regression, Bayesianische Klassifikatoren, Entscheidungsbäume, neuronale Netze, etc. ausführlich beschrieben (siehe z.B. Aggarwal 2014, Han et al. 2011). Technische Anwendungen einzelner Klassifikatoren sind vielfach dokumentiert und auch in der Patentliteratur beschrieben (US 2005/141782 A1 und US 2006/058898 A1). Auch Kombinationen aus verschiedenen Methoden kommen zur Anwendung (US 2005/097067 A1). Für das Problem des Spam-Filterns wurde ein adaptiver Ansatz beschrieben (US 2004/177110 A1). Ferner ist das Meta-Learning (dt. Meta-Lernen) (US 6,842,751 B1) bekannt.

Die bekannten Ansätze sind jedoch relativ ungenau, d.h. eine relativ hohe Anzahl von Daten wird falsch klassifiziert. Zudem sind die bekannten Ansätze, wenn überhaupt, sehr träge in der Anpassung an neue bzw. unbekannte Daten.

In der Veröffentlichung [FUQAING LIU ET AL: Dual Teaching: A Practical Semi-supervised Wrapper Method", ARXIV.ORG, CORNELL UNIVERSITY LIBRARY, ITHACA, NY, US, 12. November 2016 (2016-11-12), Seiten 1-7, XP080731271] wird ein binäres Klassifizierungsverfahren mit zwei Klassifizierern beschrieben.

Der vorliegenden Erfindung liegt somit die Aufgabe zugrunde, ein Konzept mit einer verbesserten Klassifizierungsgenauigkeit und/oder Anpassung an neue bzw. unbekannte Daten zu schaffen.

Diese Aufgabe wird durch die unabhängigen Patentansprüche gelöst.

Vorteilhafte Weiterbildungen finden sich in den abhängigen Patentansprüchen.

Ausführungsbeispiele der vorliegenden Erfindung werden bezugnehmend auf die beiliegenden Figuren näher beschrieben. Es zeigen:

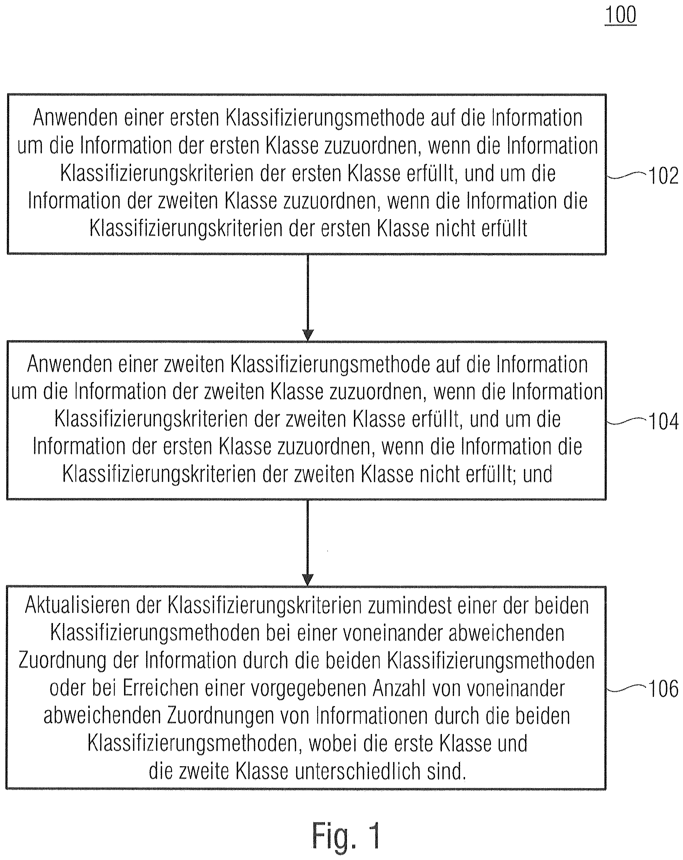

- Fig. 1: ein Flussdiagramm eines Verfahrens zum Klassifizieren von Information in eine erste Klasse oder eine zweite Klasse, gemäß einem Ausführungsbeispiel;

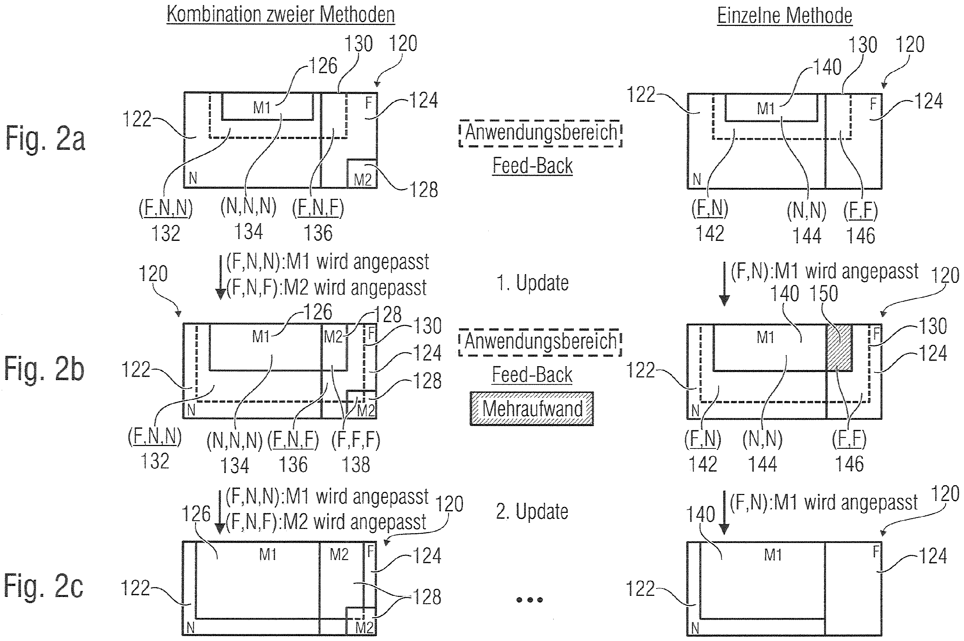

- Fig. 2a: schematische Ansichten eines Datensatzes mit Daten einer ersten Klasse und Daten einer zweiten Klasse, sowie Klassifizierungsergebnisse eines Bereichs von Daten, die mit einem Verfahren mit zwei Klassifizierungsmethoden und vergleichsweise mit einem Verfahren mit nur einer Klassifizierungsmethode bereitgestellt werden, nach einem ersten Klassifizierungsschritt, zur Illustration dass mit dem Verfahren mit zwei Klassifizierungsmethoden weniger Feedback benötigt wird als mit dem Verfahren mit nur einer Klassifizierungsmethode;
- Fig. 2b: schematische Ansichten eines Datensatzes mit Daten einer ersten Klasse und Daten einer zweiten Klasse, sowie Klassifizierungsergebnisse eines Bereichs von Daten, die mit einem Verfahren mit zwei Klassifizierungsmethoden und vergleichsweise mit einem Verfahren mit nur einer Klassifizierungsmethode bereitgestellt werden, nach einem zweiten Klassifizierungsschritt, zur Illustration dass mit dem Verfahren mit zwei Klassifizierungsmethoden weniger Feedback benötigt wird als mit dem Verfahren mit nur einer Klassifizierungsmethode;
- Fig. 2c: schematische Ansichten eines Datensatzes mit Daten einer ersten Klasse und Daten einer zweiten Klasse, sowie Klassifizierungsergebnisse eines Bereichs von Daten, die mit einem Verfahren mit zwei Klassifizierungsmethoden und vergleichsweise mit einem Verfahren mit nur einer Klassifizierungsmethode bereitgestellt werden, nach einem dritten Klassifizierungsschritt, zur Illustration dass mit dem Verfahren mit zwei Klassifizierungsmethoden weniger Feedback benötigt wird als mit dem Verfahren mit nur einer Klassifizierungsmethode;

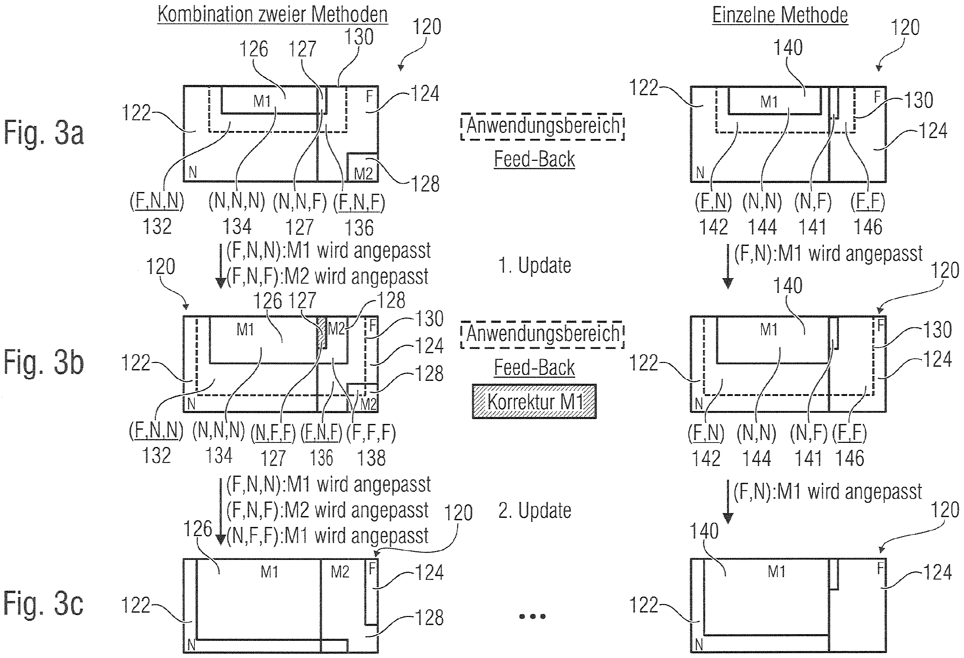

- Fig. 3a: schematische Ansichten eines Datensatzes mit Daten einer ersten Klasse und Daten einer zweiten Klasse, sowie Klassifizierungsergebnisse eines Bereichs von Daten, die mit einem Verfahren mit zwei Klassifizierungsmethoden und vergleichsweise mit einem Verfahren mit nur einer Klassifizierungsmethode bereitgestellt werden, nach einem ersten Klassifizierungsschritt, zur Illustration dass mit dem Verfahren mit zwei Klassifizierungsmethoden eine höhere Genauigkeit erzielt wird als mit dem Verfahren mit nur einer Klassifizierungsmethode;
- Fig. 3b: schematische Ansichten eines Datensatzes mit Daten einer ersten Klasse und Daten einer zweiten Klasse, sowie Klassifizierungsergebnisse eines Bereichs von Daten, die mit einem Verfahren mit zwei Klassifizierungsmethoden und vergleichsweise mit einem Verfahren mit nur einer Klassifizierungsmethode bereitgestellt werden, nach einem zweiten Klassifizierungsschritt, zur Illustration dass mit dem Verfahren mit zwei Klassifizierungsmethoden eine höhere Genauigkeit erzielt wird als mit dem Verfahren mit nur einer Klassifizierungsmethode;
- Fig. 3c: schematische Ansichten eines Datensatzes mit Daten einer ersten Klasse und Daten einer zweiten Klasse, sowie Klassifizierungsergebnisse eines Bereichs von Daten, die mit einem Verfahren mit zwei Klassifizierungsmethoden und vergleichsweise mit einem Verfahren mit nur einer Klassifizierungsmethode bereitgestellt werden, nach einem dritten Klassifizierungsschritt, zur Illustration dass mit dem Verfahren mit zwei Klassifizierungsmethoden eine höhere Genauigkeit erzielt wird als mit dem Verfahren mit nur einer Klassifizierungsmethode; und

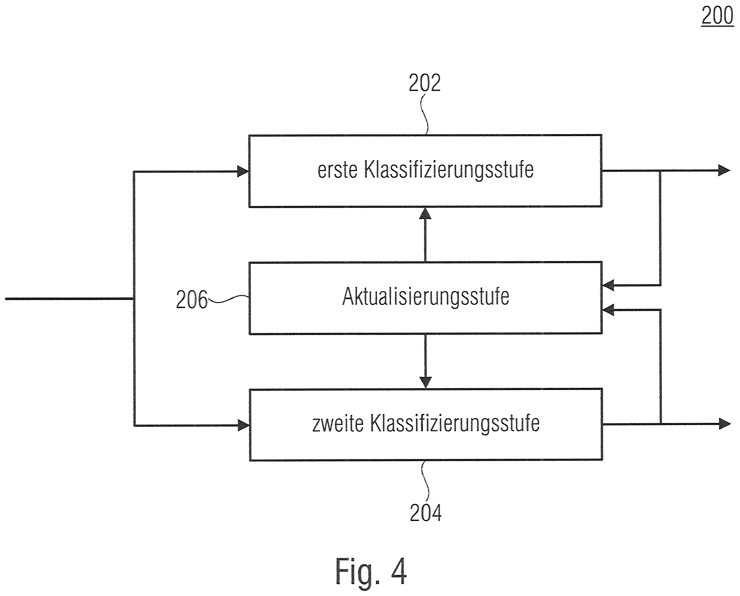

- Fig. 4: eine schematische Ansicht eines Klassifizierungsprozessors zum Klassifizieren einer Information in eine erste Klasse oder eine zweite Klasse, gemäß einem Ausführungsbeispiel der vorliegenden Erfindung.

In der nachfolgenden Beschreibung der Ausführungsbeispiele der vorliegenden Erfindung werden in den Figuren gleiche oder gleichwirkende Elemente mit dem gleichen Bezugszeichen versehen, so dass deren Beschreibung untereinander austauschbar ist.

Die Patentansprüche sind auf die Klassifizierung von Sensordaten zur Fehlererkennung in technischen Anlagen eingeschränkt. Weitere in den Anwendungsbeispielen offenbarte Anwendungsgebiete des Klassifizierungsverfahrens sind nicht erfindungsgemäß und dienen lediglich zur Veranschaulichung.

Fig. 1 zeigt ein Flussdiagram eines Verfahrens 100 zum Klassifizieren von Information in eine erste Klasse oder eine zweite Klasse. Das Verfahren 100 umfasst einen Schritt 102 des Anwendens einer ersten Klassifizierungsmethode auf die Information um die Information der ersten Klasse zuzuordnen, wenn die Information Klassifizierungskriterien der ersten Klasse erfüllt, und um die Information der zweiten Klasse zuzuordnen, wenn die Information die Klassifizierungskriterien der ersten Klasse nicht erfüllt. Ferner umfasst das Verfahren 100 einen Schritt 106 des Anwendens einer zweiten Klassifizierungsmethode auf die Information um die Information der zweiten Klasse zuzuordnen, wenn die Information Klassifizierungskriterien der zweiten Klasse erfüllt, und um die Information der ersten Klasse zuzuordnen, wenn die Information die Klassifizierungskriterien der zweiten Klasse nicht erfüllt. Ferner umfasst das Verfahren 100 einen Schritt 108 des Aktualisierens der Klassifizierungskriterien zumindest einer der beiden Klassifizierungsmethoden bei einer voneinander abweichenden Zuordnung der Information durch die beiden Klassifizierungsmethoden oder bei Erreichen einer vorgegebenen Anzahl von voneinander abweichenden Zuordnungen von Informationen durch die beiden Klassifizierungsmethoden. Dabei sind die erste Klasse und die zweite Klasse unterschiedlich.

Bei Ausführungsbeispielen kann das Verfahren 100 Daten (z.B. Informationen über eine E-Mail (Absender, Empfänger, Betreff, etc.), eine technische Anlage (Temperatur, Druck, Ventilstellung, etc.), oder ein Krankheitsbild (Symptome, Alter, Blutwerte, etc.)) klassifizieren. Natürlich kann das Verfahren 100 auch Daten (z.B. Informationen über eine E-Mail (Absender, Empfänger, Betreff, etc.), eine technische Anlage (Temperatur, Druck, Ventilstellung, etc.), oder ein Krankheitsbild (Symptome, Alter, Blutwerte, etc.)) eines Datensatzes (z.B. eines Satzes von Informationen über E-Mails, technische Anlagen oder Krankheitsbilder) klassifizieren, wobei die Daten des Datensatzes einzeln durch das Verfahren klassifiziert werden können (z.B. jede E-Mail des Satzes von E-Mails wird einzeln klassifiziert).

Bei Ausführungsbeispielen können die erste Klassifizierungsmethode und die zweite Klassifizierungsmethode komplementär zueinander sein. Die erste Klassifizierungsmethode kann dabei ausgebildet sein (z.B. geeignet sein oder darauf trainiert sein), um Informationen zu erkennen, die zu der ersten Klasse gehören, während die zweite Klassifizierungsmethode ausgebildet sein kann (z.B. geeignet sein oder darauf trainiert sein), um Informationen zu erkennen, die zu der zweiten Klasse gehören. Nicht erkannte Informationen können dabei durch die jeweilige Klassifizierungsmethode der jeweils anderen Klasse zugeordnet werden.

Beispielsweise können die erste Klassifizierungsmethode und die zweite Klassifizierungsmethode unterschiedlich sein, so dass die erste Klassifizierungsmethode Informationen erkennt, die zu der ersten Klasse gehören, und die zweite Klassifizierungsmethode Informationen erkennt, die zu der zweiten Klasse gehören. Zum Beispiel kann die erste Klassifizierungsmethode eine Ausreißererkennungsmethode sein, während die zweite Klassifizierungsmethode eine regelbasierte Methode sein kann.

Natürlich können die erste Klassifizierungsmethode und die zweite Klassifizierungsmethode auch gleich sein, sich jedoch durch das Training unterscheiden, so dass die erste Klassifizierungsmethode Informationen erkennt, die zu der ersten Klasse gehören, und die zweite Klassifizierungsmethode Informationen erkennt, die zu der zweiten Klasse gehören. Zum Beispiel können beide Klassifizierungsmethoden Ausreißererkennungsmethoden oder regelbasierte Methoden sein.

Das Verfahren 100 kann somit eine Kombination aus z.B. unterschiedlichen Klassifizierungsmethoden nutzen, z.B. Methoden des maschinellen Lernens, wobei beispielsweise auch Expertenwissen einfließen kann. Durch eine Aktualisierung (Update) jeder Methode mittels Rückkopplung (Feedback) während der Verwendung kann die Genauigkeit im Laufe der Anwendung zunehmend verbessert werden und die Methoden können auf Veränderungen in den Randbedingungen reagieren.

Im Folgenden werden beispielhaft zwei Komplementäre Ansätze beschrieben, Klassifikationsmethoden (welche zwei Klassen unterscheiden) zu implementieren.

Der erste Ansatz beruht auf Wissen über die Klassenzugehörigkeit zu Klasse 1 (z.B. "normale Daten", im Folgenden N-Daten genannt), wobei alle Daten, welche nicht die Kriterien für Klasse 1 erfüllen automatisch Klasse 2 (z.B. "fehlerhafte Daten", im Folgenden F-Daten genannt) zugeordnet werden. Umgekehrt beruht der zweite Ansatz auf Wissen über die Klassenzugehörigkeit zu Klasse 2, wobei alle Daten, welche nicht die Kriterien für Klasse 2 erfüllen, automatisch Klasse 1 zugeordnet werden. In den typischen Anwendungsfällen (z.B. Spam-Erkennung, Tumor-Erkennung, Fehler-Erkennung) gilt es, wenige Daten der Klassenzugehörigkeit 2 (fehlerhafte Daten) aus sehr vielen Daten der Klassenzugehörigkeit 1 (normale Daten) herauszufiltern. Aus diesem Grund können sich die beiden oben genannten Ansätze deutlich voneinander unterscheiden: im ersten Fall werden typischerweise relativ viele "falsch positive" Ergebnisse erzeugt (Klasse 1 wird als Klasse 2 klassifiziert), während im zweiten Fall relativ viele "falsch negative" Ergebnisse erzeugt werden (Klasse 2 wird als Klasse 1 klassifiziert). Je nach Anwendungsfall ist der eine oder der andere Nachteil besser zu tolerieren. Im Idealfall sollte eine Klassifizierungsmethode eine möglichst geringe falsch positive Rate (hohe Spezifität) und gleichzeitig eine möglichst geringe falsch negative Rate (hohe Sensitivität) aufweisen.

Das Verfahren 100 kann beispielhaft auf einer Kombination der beiden oben beschriebenen Ansätze beruhen. Optional kann auch Wissen über die Klassenzugehörigkeiten, welches während der Anwendung hinzugewonnen werden kann, in die kontinuierliche Verbesserungen der jeweiligen Methoden einfließen (Feedback). Der Vorteil in der Kombination zweier (komplementärer) Methoden besteht, im Vergleich zur Verwendung einer einzigen Methode mit kontinuierlichem Update, darin, dass im Allgemeinen weniger Feedback notwendig ist, um eine hohe Genauigkeit zu erreichen, wie dies nachfolgend Anhand von Fig. 2 detailliert beschrieben wird. Darüber hinaus besteht durch eine Kombination zweier komplementärer Methoden die Möglichkeit, sowohl falsch positive als auch falsch negative Ergebnisse jeder einzelnen Methode zu identifizieren und mittels Feedback zu reduzieren, wie dies später anhand von Fig. 3 näher beschrieben wird.

Fig. 2a zeigt auf der linken Seite eine schematische Ansicht eines Datensatzes 120 mit Daten 122 einer ersten Klasse (bzw. Daten 122 erster Klasse, z.B. normale Daten (N)) und Daten 124 einer zweiten Klasse (bzw. Daten 124 zweiter Klasse, z.B. fehlerhafte Daten (F)), sowie nach einer Initialisierungsphase beispielhaft einen Bereich 126 des Datensatzes 120, der durch die erste Klassifizierungsmethode (M1) als zu der ersten Klasse zugehörig erkannt wird, und einen Bereich 128 des Datensatzes 120, der durch die zweite Klassifizierungsmethode (M2) als zu der zweiten Klasse zugehörig erkannt wird, und einen Bereich (Anwendungsbereich) 130 von Daten des Datensatzes 120, auf den das Verfahren 100 mit den zwei Klassifizierungsmethoden angewendet wird.

In Fig. 2a (und auch in den Fig. 2b und 2c) sind dabei für die jeweiligen Bereiche des Datensatzes 120 die Klassifizierungsergebnisse des Verfahrens 100 in Klammern angeben, wobei in den Klammern ein erster Wert das Klassifizierungsergebnis der ersten Klassifizierungsmethode angibt, ein zweiter Wert das Klassifizierungsergebnis der zweiten Klassifizierungsmethode angibt, und ein dritter Wert das tatsächliche Klassifizierungsergebnis (bzw. Soll-Klassifizierungsergebnis) angibt. Unterstrichen sind diejenigen Bereiche, die mittels Feedback in die Aktualisierung der Klassifizierungsmethoden eingehen.

Wie in Fig. 2a auf der linken Seite zu erkennen ist, ist der Bereich 132 der Daten 122 erster Klasse (z.B. normale Daten) des Datensatzes 120 innerhalb des Anwendungsbereichs 130 jedoch außerhalb des Bereichs 126 des Datensatzes 120, der durch die erste Klassifizierungsmethode als zu der ersten Klasse zugehörig erkannt wird, mit (F,N,N) angeben, d.h. die erste Klassifizierungsmethode ordnet die Daten des Bereichs 132 des Datensatzes 120 der zweiten Klasse von Daten (z.B. fehlerhafte Daten) zu, während die zweite Klassifizierungsmethode die Daten des Bereichs 132 des Datensatzes 120 der ersten Klassen von Daten (z.B. normale Daten) zuordnet. Tatsächlich hätten die Daten dieses Bereichs 132 des Datensatzes 120 jedoch der ersten Klasse von Daten (z.B. normale Daten) zugeordnet werden sollen, so dass das Klassifizierungsergebnis der ersten Klassifizierungsmethode falsch ist und somit die erste Klassifizierungsmethode (bzw. die Klassifizierungskriterien der ersten Klassifizierungsmethode) in einem nachfolgenden Trainingsschritt der Aktualisierungsphase anzupassen ist.

Der Bereich 134 der Daten 122 erster Klasse (z.B. normale Daten) innerhalb des Anwendungsbereichs 130 und innerhalb des Bereichs 126 des Datensatzes 120, der durch die erste Klassifizierungsmethode als zu der ersten Klasse von Daten (z.B. normale Daten) zugehörig erkannt wird, ist mit (N,N,N) angeben, d.h. die erste Klassifizierungsmethode ordnet die Daten des Bereichs 134 des Datensatzes 120 der ersten Klasse von Daten (z.B. normale Daten) zu und auch die zweite Klassifizierungsmethode ordnet die Daten des Bereichs 134 der Datensatzes 120 der ersten Klassen von Daten (z.B. normale Daten) zu. Die Daten des Bereichs 134 des Datensatzes 120 hätten auch der ersten Klasse zugeordnet werden sollen, so dass die Klassifizierungsergebnisse beider Klassifizierungsmethoden korrekt sind.

Der Bereich 136 der Daten 124 zweiter Klasse (z.B. fehlerhafte Daten) des Datensatzes 120 innerhalb des Anwendungsbereichs 130 ist mit (F,N,F) angeben, d.h. die erste Klassifizierungsmethode ordnet die Daten des Bereichs 136 des Datensatzes 120 der zweiten Klasse von Daten (z.B. fehlerhafte Daten) zu, während die zweite Klassifizierungsmethode die Daten des Bereichs 136 der Datensatzes 120 der ersten Klasse von Daten (z.B. normale Daten) zuordnet. Tatsächlich hätten die Daten des Bereichs 136 des Datensatzes 120 der zweiten Klasse von Daten (z.B. fehlerhafte Daten) zugeordnet werden sollen, so dass das Klassifizierungsergebnis der zweiten Klassifizierungsmethode falsch ist und somit die zweite Klassifizierungsmethode (bzw. die Klassifizierungskriterien der zweiten Klassifizierungsmethode) in einem nachfolgenden Trainingsschritt der Aktualisierungsphase anzupassen ist.

Zum Vergleich ist in Fig. 2a auf der rechten Seite ferner eine schematische Ansicht des gleichen Datensatzes 120 mit den Daten 122 der ersten Klasse (z.B. normale Daten) und den Daten 124 der zweiten Klasse (z.B. fehlerhafte Daten), sowie nach einer Initialisierungsphase beispielhaft ein Bereich 140 des Datensatzes, der durch eine einzelne Klassifizierungsmethode (M1) als zu der ersten Klasse von Daten (z.B. normale Daten) zugehörig erkannt wird, und ein Bereich (Anwendungsbereich) 130 von Daten des Datensatzes, auf den ein herkömmliches Verfahren mit nur einer einzelnen Klassifizierungsmethode angewendet wird, gezeigt.

In Fig. 2a (und auch in den Fig. 2b und 2c) sind ferner für die jeweiligen Bereiche die Klassifizierungsergebnisse des herkömmlichen Verfahrens in Klammern angeben, wobei in den Klammern ein erster Wert das Klassifizierungsergebnis der einzelnen Klassifizierungsmethode angibt und ein zweiter Wert das tatsächlich Klassifizierungsergebnis (bzw. Soll-Klassifizierungsergebnis) angibt.

So ist der Bereich 142 der Daten 122 erster Klasse (z.B. normale Daten) des Datensatzes 120 innerhalb des Anwendungsbereichs 130 jedoch außerhalb des Bereichs 140 von Daten, der durch die einzelne Klassifizierungsmethode als zu der ersten Klasse von Daten (z.B. normale Daten) zugehörig erkannt wird, mit (F,N) angeben, d.h. die einzelne Klassifizierungsmethode ordnet die Daten des Bereichs 142 des Datensatzes 120 der zweiten Klasse (z.B. fehlerhafte Daten) zu. Tatsächlich hätten die Daten des Bereichs 142 des Datensatzes 120 jedoch der ersten Klasse von Daten (z.B. normale Daten) zugeordnet werden sollen, so dass das Klassifizierungsergebnis der einzelnen Klassifizierungsmethode falsch ist und somit die einzelne Klassifizierungsmethode (bzw. die Klassifizierungskriterien der einzelnen Klassifizierungsmethode) in einem nachfolgenden Trainingsschritt der Aktualisierungsphase anzupassen ist.

Der Bereich 144 der Daten 122 erster Klasse (z.B. normale Daten) innerhalb des Anwendungsbereichs 130 und innerhalb des Bereichs 140 von Daten, der durch die einzelne Klassifizierungsmethode als zu der ersten Klasse von Daten (z.B. normale Daten) zugehörig erkannt wird, mit (N,N) angeben, d.h. die einzelne Klassifizierungsmethode ordnet die Daten des Bereichs 144 des Datensatzes 120 der ersten Klasse von Daten (z.B. normale Daten) zu. Die Daten des Bereichs 144 des Datensatzes 120 hätten auch der ersten Klasse von Daten (z.B. normale Daten) zugeordnet werden sollen, so dass das Klassifizierungsergebnis der einzelnen Klassifizierungsmethode korrekt ist.

Der Bereich 146 der Daten 124 zweiter Klasse (z.B. fehlerhafte Daten) des Datensatzes 120 innerhalb des Anwendungsbereichs 130 ist mit (F,F) angeben, d.h. die einzelne Klassifizierungsmethode ordnet die Daten des Bereichs 146 des Datensatzes 120 der zweiten Klasse von Daten (z.B. fehlerhafte Daten) zu. Die Daten des Bereichs 136 des Datensatzes 120 hätten auch der zweiten Klasse von Daten (z.B. fehlerhafte Daten) zugeordnet werden sollen, so dass das Klassifizierungsergebnis der einzelnen Klassifizierungsmethode korrekt ist.

Fig. 2b zeigt auf der linken Seite eine schematische Ansicht des Datensatzes 120 mit den Daten 122 der ersten Klasse (z.B. normale Daten) und den Daten 124 der zweiten Klasse (z.B. fehlerhafte Daten), sowie nach einem ersten Trainingsschritt der Aktualisierungsphase beispielhaft einen Bereich 126 von Daten, der durch die erste Klassifizierungsmethode nunmehr als zu der ersten Klasse von Daten (z.B. normale Daten) zugehörig erkannt wird, und einen Bereich 128 von Daten, der durch die zweite Klassifizierungsmethode nunmehr als zu der zweiten Klasse von Daten (z.B. fehlerhafte Daten) zugehörig erkannt wird, und einen Bereich (Anwendungsbereich) 130 von Daten des Datensatzes 120, auf den das Verfahren 100 angewendet wird.

Wie in Fig. 2b zu erkennen ist, wurden die beiden Klassifizierungsmethoden (bzw. die Klassifizierungskriterien der beiden Klassifizierungsmethoden) basierend auf den vorherigen Klassifizierungsergebnissen aktualisiert. Im Detail kann die erste Klassifizierungsmethode (bzw. die Klassifizierungskriterien der ersten Klassifizierungsmethode) basierend auf dem zuvor falsch erkannten Bereich 132 des Datensatzes 120 aktualisiert werden, so dass die erste Klassifizierungsmethode diesen Bereich 132 des Datensatzes 120 nunmehr als Daten der ersten Klasse 122 erkennt. Ferner kann die zweite Klassifizierungsmethode (bzw. die Klassifizierungskriterien der zweiten Klassifizierungsmethode) basierend auf dem zuvor falsch erkannten Bereich 136 des Datensatzes 120 aktualisiert werden, so dass die zweite Klassifizierungsmethode diesen Bereich 136 des Datensatzes 120 nunmehr als Daten der zweiten Klasse 122 erkennt. Der Bereich 126 des Datensatzes 120, der durch die erste Klassifizierungsmethode als zu der ersten Klasse von Daten (z.B. normale Daten) zugehörig erkannt wird, ist somit verglichen mit Fig. 2a größer geworden. Genauso ist der Bereich 128 des Datensatzes 120, der durch die zweite Klassifizierungsmethode als zu der zweiten Klasse von Daten (z.B. fehlerhafte Daten) zugehörig erkannt wird, verglichen mit Fig. 2a größer geworden.

Nach dem ersten Aktualisierungsschritt ist in Fig. 2b der Bereich 132 der Daten 122 erster Klasse (z.B. normale Daten) des Datensatzes 120 innerhalb des Anwendungsbereichs 130 jedoch außerhalb des Bereichs 126 von Daten, der durch die erste Klassifizierungsmethode nunmehr als zu der ersten Klasse von Daten (z.B. normale Daten) zugehörig erkannt wird, mit (F,N,N) angeben, d.h. die erste Klassifizierungsmethode ordnet die Daten des Bereichs 132 des Datensatzes 120 der zweiten Klasse von Daten (z.B. fehlerhafte Daten) zu, während die zweite Klassifizierungsmethode die Daten des Bereichs 132 des Datensatzes 120 der ersten Klassen von Daten (z.B. normale Daten) zuordnet. Tatsächlich hätten die Daten des Bereichs 132 des Datensatzes 120 der ersten Klasse von Daten (z.B. normale Daten) zugeordnet werden sollen, so dass das Klassifizierungsergebnis der ersten Klassifizierungsmethode falsch ist und somit die erste Klassifizierungsmethode (bzw. die Klassifizierungskriterien der ersten Klassifizierungsmethode) in einem nachfolgenden Trainingsschritt der Aktualisierungsphase anzupassen ist.

Der Bereich 134 der Daten 122 erster Klasse innerhalb des Anwendungsbereichs 130 und innerhalb des Bereichs 126 von Daten, der durch die erste Klassifizierungsmethode nunmehr als zu der ersten Klasse von Daten (z.B. normale Daten) zugehörig erkannt wird, ist mit (N,N,N) angeben, d.h. die erste Klassifizierungsmethode ordnet die Daten des Bereichs 134 des Datensatzes 120 der ersten Klasse von Daten (z.B. normale Daten) zu und auch die zweite Klassifizierungsmethode ordnet die Daten des Bereichs 134 des Datensatzes 120 der ersten Klasse von Daten (z.B. normale Daten) zu. Die Daten des Bereichs 134 des Datensatzes 120 hätten auch der ersten Klasse von Daten (z.B. normale Daten) zugeordnet werden sollen, so dass die Klassifizierungsergebnisse beider Klassifizierungsmethoden korrekt sind.

Der Bereich 136 der Daten 124 zweiter Klasse (fehlerhafte Daten) des Datensatzes 120 innerhalb des Anwendungsbereichs 130 und außerhalb der Bereiche 128 der Daten, die durch die zweite Klassifizierungsmethode nunmehr korrekt als zu der zweiten Klasse zugehörig erkannt werden, ist mit (F,N,F) angeben, d.h. die erste Klassifizierungsmethode ordnet die Daten dieses Bereichs 136 des Datensatzes 120 der zweiten Klasse (fehlerhafte Daten) zu, während die zweite Klassifizierungsmethode die Daten dieses Bereichs 136 der Datensatzes 120 der ersten Klassen (normale Daten) zuordnet. Tatsächlich hätten die Daten dieses Bereichs 136 des Datensatzes 120 der zweiten Klasse (fehlerhafte Daten) zugeordnet werden sollen, so dass das Klassifizierungsergebnis der zweiten Klassifizierungsmethode falsch ist und somit die zweite Klassifizierungsmethode (bzw. die Klassifizierungskriterien der zweiten Klassifizierungsmethode) in einem nachfolgenden Trainingsschritt der Aktualisierungsphase anzupassen ist.

Der Bereich 138 der Daten zweiter Klasse (z.B. fehlerhafte Daten) innerhalb des Anwendungsbereichs 130 und innerhalb der Bereiche 128 der Daten, die durch die zweite Klassifizierungsmethode nunmehr korrekt als zu der zweiten Klasse von Daten (z.B. normale Daten) zugehörig erkannt werden, ist mit (F,F,F) angegeben, d.h. die erste Klassifizierungsmethode ordnet die Daten des Bereichs 138 des Datensatzes 120 der zweiten Klasse von Daten (z.B. fehlerhafte Daten) zu und auch die zweite Klassifizierungsmethode ordnet die Daten des Bereichs 138 des Datensatzes 120 der zweiten Klasse von Daten (z.B. fehlerhafte Daten) zu. Die Daten des Bereichs 138 des Datensatzes 120 hätten auch der zweiten Klasse von Daten zugeordnet werden sollen, so dass die Klassifizierungsergebnisse beider Klassifizierungsmethoden korrekt sind.

Zum Vergleich ist in Fig. 2b auf der rechten Seite ferner eine schematische Ansicht des gleichen Datensatzes 120 mit den Daten 122 erster Klasse (z.B. normale Daten) und den Daten 124 zweiter Klasse (z.B. fehlerhafte Daten), sowie nach einem ersten Trainingsschritt der Trainingsphase beispielhaft ein Bereich 140 von Daten, der durch die einzelne Klassifizierungsmethode nunmehr als zu der ersten Klasse von Daten (z.B. normale Daten) zugehörig erkannt wird, und ein Bereich (Anwendungsbereich) 130 von Daten des Datensatzes 120, auf den das herkömmliche Verfahren mit der einzelnen Klassifizierungsmethode angewendet wird, gezeigt.

Wie in Fig. 2b auf der rechten Seite zu erkennen ist, wurde auch die einzelne Klassifizierungsmethode basierend auf dem zuvor falsch erkannten Bereich 142 des Datensatzes 120 angepasst, so dass die einzelne Klassifizierungsmethode diesen Bereich 142 des Datensatzes 120 nunmehr als Daten der ersten Klasse 122 erkennt. Verglichen mit dem Verfahren 100 ergibt sich jedoch ein Mehraufwand, der in Fig. 2b als grauer (schraffierter) Bereich 150 gekennzeichnet ist. Im Detail kommt der Mehraufwand im nächsten Aktualisierungsschritt zum Tragen, da dann der Bereich 146 (inkl. 150) für das Update verwendet wird, während auf der linken Seite nur 136 (ohne 128) verwendet wird, ein kleinerer Bereich.

Nach dem ersten Aktualisierungsschritt ist der Bereich 142 der Daten 122 erster Klasse (z.B. normale Daten) des Datensatzes 120 innerhalb des Anwendungsbereichs 130 jedoch außerhalb des Bereichs 140 des Datensatzes 120, der durch die einzelne Klassifizierungsmethode als zu der ersten Klasse (z.B. normale Daten) zugehörig erkannt wird, mit (F,N) angeben, d.h. die einzelne Klassifizierungsmethode ordnet die Daten des Bereichs 142 des Datensatzes 120 der zweiten Klasse (fehlerhafte Daten) zu. Tatsächlich hätten die Daten dieses Bereichs 142 des Datensatzes 120 jedoch der ersten Klasse (z.B. normale Daten) zugeordnet werden sollen, so dass das Klassifizierungsergebnis der einzelnen Klassifizierungsmethode falsch ist und somit die einzelne Klassifizierungsmethode (bzw. die Klassifizierungskriterien der einzelnen Klassifizierungsmethode) in einem nachfolgenden Trainingsschritt der Aktualisierungsphase anzupassen ist.

Der Bereich 144 der Daten 122 erster Klasse (z.B. normale Daten) innerhalb des Anwendungsbereichs 130 und innerhalb des Bereichs 140 des Datensatzes 120, der durch die einzelne Klassifizierungsmethode als zu der ersten Klasse (z.B. normale Daten) zugehörig erkannt wird, mit (N,N) angeben, d.h. die einzelne Klassifizierungsmethode ordnet die Daten dieses Bereichs 144 des Datensatzes 120 der ersten Klasse (z.B. normale Daten) zu. Die Daten dieses Bereichs 144 des Datensatzes 120 hätten auch der ersten Klasse (z.B. normale Daten) zugeordnet werden sollen, so dass das Klassifizierungsergebnis der einzelnen Klassifizierungsmethode korrekt ist.

Der Bereich 146 der Daten 124 zweiter Klasse (z.B. fehlerhafte Daten) des Datensatzes 120 innerhalb des Anwendungsbereichs 130 ist mit (F,F) angeben, d.h. die einzelne Klassifizierungsmethode ordnet die Daten dieses Bereichs 146 des Datensatzes 120 der zweiten Klasse von Daten (z.B. fehlerhafte Daten) zu. Die Daten dieses Bereichs 146 des Datensatzes 120 hätten auch der zweiten Klasse von Daten (z.B. fehlerhafte Daten) zugeordnet werden sollen, so dass das Klassifizierungsergebnis der einzelnen Klassifizierungsmethode korrekt ist.

Fig. 2c zeigt auf der linken Seite eine schematische Ansicht des Datensatzes 120 mit den Daten 122 (N) der ersten Klasse (z.B. normale Daten) und den Daten 124 (F) der zweiten Klasse (z.B. fehlerhafte Daten), sowie nach einem zweiten Trainingsschritt der Trainingsphase beispielhaft einen Bereich 126 (M1) von Daten, der durch die erste Klassifizierungsmethode nunmehr als zu der ersten Klasse von Daten (z.B. normale Daten) zugehörig erkannt wird, und Bereiche (M2) von Daten, die durch die zweite Klassifizierungsmethode nunmehr als zu der zweiten Klasse von Daten (z.B. fehlerhafte Daten) zugehörig erkannt wird.

Wie in Fig. 2c zu erkennen ist, wurden die beiden Klassifizierungsmethoden (bzw. die Klassifizierungskriterien der beiden Klassifizierungsmethoden) basierend auf den vorherigen Klassifizierungsergebnissen aktualisiert. Im Detail kann die erste Klassifizierungsmethode (bzw. die Klassifizierungskriterien der ersten Klassifizierungsmethode) basierend auf dem zuvor falsch erkannten Bereich 132 des Datensatzes 120 aktualisiert worden sein, so dass die erste Klassifizierungsmethode diesen Bereich 132 des Datensatzes 120 nunmehr als Daten der ersten Klasse 122 erkennt. Ferner kann die zweite Klassifizierungsmethode (bzw. die Klassifizierungskriterien der zweiten Klassifizierungsmethode) basierend auf dem zuvor falsch erkannten Bereich 136 des Datensatzes 120 aktualisiert worden sein, so dass die zweite Klassifizierungsmethode diesen Bereich 136 des Datensatzes 120 nunmehr als Daten der zweiten Klasse 122 erkennt. Der Bereich 126 (M1) des Datensatzes 120, der durch die erste Klassifizierungsmethode als zu der ersten Klasse zugehörig erkannt wird, ist somit verglichen mit Fig. 2b größer geworden. Genauso ist der Bereich 128 (M2) des Datensatzes 120, der durch die zweite Klassifizierungsmethode als zu der zweiten Klasse zugehörig erkannt wird, verglichen mit Fig. 2b größer geworden.

Zum Vergleich ist in Fig. 2c auf der rechten Seite ferner eine schematische Ansicht des gleichen Datensatzes 120 mit den Daten 122 erster Klasse (z.B. normale Daten) und den Daten 124 zweiter Klasse (z.B. fehlerhafte Daten), sowie nach einem zweiten Aktualisierungsschritt beispielhaft ein Bereich 140 (M1) des Datensatzes, der durch die einzelne Klassifizierungsmethode nunmehr als zu der ersten Klasse zugehörig erkannt wird, gezeigt.

Wie in Fig. 2c auf der rechten Seite zu erkennen ist, wurde auch die einzelne Klassifizierungsmethode basierend auf dem zuvor falsch erkannten Bereich 142 des Datensatzes 120 angepasst, so dass die einzelne Klassifizierungsmethode diesen Bereich 142 des Datensatzes 120 nunmehr als Daten der ersten Klasse 122 erkennt.

Mit anderen Worten, Fig. 2a bis 2c zeigen eine Illustration des Update-Mechanismuses mittels Feed-Back bei einer Kombination zweier Methoden M1 und M2. Der gesamte Zustandsraum des Systems kann beispielhaft einen gewissen Anteil "fehlerhafter" Zustände (F) und "normaler" Zustände (N) umfassen. Zu Beginn kann ein bekannter N-Datensatz zum Training von M1 verwendet und ggf. ein bekannter F-Datensatz oder aus Expertenwissen bekannte Regeln zur Initialisierung von M2 verwendet werden. Die Anwendung der beiden Methoden erfolgt auf unbekannten Daten (gestrichelt eingerahmter Bereich) 130. Falls die Klassifikation von M1 nicht mit der Klassifikation von M2 übereinstimmt (unterstrichene Bereiche 132, 136, 142, 146), können zusätzliche Informationen (z.B. Expertenwissen) über ein Feed-Back zur Anpassung einer oder beider Methoden herangezogen werden. Im Laufe der Anwendung und durch kontinuierliches Feed-Back können M1 und M2 stetig angepasst werden, wobei immer weniger Feed-Back benötigt wird, bis schließlich im Idealfall der gesamte Zustandsraum korrekt klassifiziert wird.

Ab dem 2.Update (zweiter Aktualisierungsschritt) zahlt sich die Verwendung einer Kombination komplementärer Methoden (linke Seite in Fig. 2a bis 2c) im Vergleich zu einer einzelnen Methode (rechte Seite in Fig. 2a bis 2c) aus, da für eine einzelne Methode mehr Feed-Back benötigt wird (grauer (schraffierter) Bereich). Bei einer einzelnen Methode vom Typ M1 wird dabei für alle F-Ergebnisse Feed-Back eingeholt, da die Anzahl der falsch positiven Ergebnisse tendenziell hoch ist. Bei einer einzelnen Methode vom Typ M2 (nicht dargestellt) würde für alle N-Ergebnisse Feed-Back eingeholt, da die Anzahl der falsch negativen Ergebnisse tendenziell hoch ist.

Verglichen mit Fig. 2a bis 2c ist in Fig. 3a bis 3c ein Fall gezeigt, bei dem die erste Klassifizierungsmethode (M1) beispielhaft einen Bereich 127 von Daten der zweiten Klasse (z.B. fehlerhafte Daten) fälschlicherweise als Daten der ersten Klasse (z.B. normale Daten) klassifiziert.

Als Klassifizierungsergebnis ist für diesen Bereich 127 in Fig. 3a (N,N,F) angegeben, d.h. die erste Klassifizierungsmethode ordnet die Daten des Bereichs 127 der ersten Klasse von Daten (z.B. normale Daten) zu und auch die zweite Klassifizierungsmethode ordnet die Daten des Bereichs 127 der ersten Klasse von Daten (z.B. normale Daten) zu. Tatsächlich handelt es sich jedoch bei den Daten des Bereichs 127 um Daten der zweiten Klasse (z.B. fehlerhafte Daten), so dass das Klassifizierungsergebnis beider Klassifizierungsmethoden falsch ist. Dementsprechend sind beide Klassifizierungsmethoden (bzw. die Klassifizierungskriterien beider Klassifizierungsmethoden) in einem nachfolgenden (iterativen) Aktualisierungsschritt anzupassen.

Das herkömmliche Klassifizierungsverfahren liefert in diesem Fall für den Bereich 141 als Klassifizierungsergebnis (N,F), d.h. die einzelne Klassifizierungsmethode ordnet die Daten des Bereichs 127 der ersten Klasse von Daten (z.B. normale Daten) zu. Tatsächlich handelt es sich jedoch bei den Daten des Bereichs 127 um Daten der zweiten Klasse (z.B. fehlerhafte Daten), so dass das Klassifizierungsergebnis der einzelnen Klassifizierungsmethode falsch ist.

Wie in Fig. 3b auf der linken Seite zu erkennen ist, wird nach der Anpassung für den Bereich 127 als Klassifizierungsergebnis (N,F,F) angegeben, d.h. die erste Klassifizierungsmethode ordnet die Daten des Bereichs 127 nach wie vor der ersten Klasse von Daten (z.B. normale Daten) zu, währende die zweite Klassifizierungsmethode die Daten des Bereichs 127 bereits der zweiten Klasse von Daten (z.B. fehlerhafte Daten) zuordnet. Somit ist das Klassifizierungsergebnis der ersten Klassifizierungsmethode nach wie vor falsch, so dass die erste Klassifizierungsmethode (bzw. die Klassifizierungskriterien der ersten Klassifizierungsmethode) in einem nachfolgenden Aktualisierungsschritt anzupassen ist.

Auch das herkömmliche Klassifizierungsverfahren liefert noch in Fig. 3b für den Bereich 141 als Klassifizierungsergebnis (N,F), d.h. die einzelne Klassifizierungsmethode ordnet die Daten des Bereichs 127 der ersten Klasse von Daten (z.B. normale Daten) zu. Tatsächlich handelt es sich jedoch bei den Daten des Bereichs 127 um Daten der zweiten Klasse (z.B. fehlerhafte Daten), so dass das Klassifizierungsergebnis der einzelnen Klassifizierungsmethode falsch ist. Eine Anpassung erfolgt nicht (Bereich nicht unterstrichen), da nur für F-Ergebnisse Feedback eingeholt wird.

Mit anderen Worten, Fig. 3a bis 3c zeigen eine Illustration des Update-Mechanismus mittels Feed-Back. Im Detail zeigen Fig. 3a bis 3c eine Gegenüberstellung der Vorgehensweise für eine Kombination aus zwei komplementären Methoden im Vergleich zu einer einzelnen Methode. Im Gegensatz zu Fig. 2a bis 2c ist hier der Fall dargestellt, dass M1 falsch negative Ergebnisse generiert. Eine Korrektur von M1 ist bei Verwendung einer einzelnen Methode (rechte Seite in Fig. 3a bis 3c) nicht möglich. Eine Kombination zweier komplementärer Methoden ermöglicht jedoch eine entsprechende Anpassung (siehe Fig. 3c). Analog kann eine Korrektur von M2 erfolgen, für den Fall, dass M2 falsch positive Ergebnisse generiert.

Im Folgenden werden beispielhafte Implementierungen der ersten Klassifizierungsmethode und der zweiten Klassifizierungsmethode beschrieben.

Als erste Klassifizierungsmethode (Methode 1 (M1)) kann eine Methode zur "Ausreißererkennung" verwendet werden. Dazu zählen verschiedene Methoden aus dem Data Mining (dt. Abbau von Daten) und maschinellen Lernen, wie multiple lineare Regression, Clustering (d.t. Clusterbildung), qualitative Modelle, etc. Entscheidend kann bei dieser Methode sein, dass sie auf einem Trainingsdatensatz, der ausschließlich Klasse 1 (N-Daten) enthält, trainiert wird. Bei Bedarf können die Parameter für die verwendete Methode mittels eines Testdatensatzes, welcher auch Daten der Klasse 2 (F-Daten) enthält, adjustiert werden.

Als zweite Klassifizierungsmethode (Methode 2 (M2)) kann eine regelbasierte Methode verwendet werden, wobei die Regeln beispielsweise manuell (basierend auf Expertenwissen) formuliert werden können, oder eine (binäre) Klassifikationsmethode, wie zum Beispiel Support Vector Machines (dt. Stützvektormaschinen), Entscheidungsbäume, logistische Regression, Neuronale Netze, etc. verwendet werden können. Auch ein kombinierter Regelsatz aus Experten-Regeln und automatisiert erstellten Regeln/Klassifikatoren ist möglich. Ein Trainingsdatensatz für M2 kann sowohl F-Daten als auch N-Daten enthalten. Als Methode für die automatisierte Extraktion von Regeln aus einem entsprechenden Trainingsdatensatz können Entscheidungsbäume, bzw. Entscheidungswälder verwendet werden. Entscheidend für die Verwendung von Experten-Regeln kann sein, dass sie auf Basis von bekannten Fehlern (Zugehörigkeit zu Klasse 2) formuliert werden können.

Im Folgenden wird der (iterative bzw. kontinuierliche) Aktualisierungsvorgang des Verfahrens 100 zum Klassifizieren von Daten näher beschrieben.

In einem ersten Schritt kann ein Trainingsdatensatz verwendet werden, der nur N-Daten enthält. Die erste Klassifizierungsmethode (M1) kann auf diesem Trainingsdatensatz trainiert werden. Eventuell benötigte Parameter für M1 können entweder zunächst geschätzt oder mittels einer Kreuzvalidierung ermittelt werden.

In einem zweiten Schritt können ggf. bereits bekannte Fehler als Regeln formuliert werden. Diese können dann den Ausgangspunkt für die zweite Klassifizierungsmethode (M2) bilden. Andernfalls kann für M2 eine Voreinstellung verwendet werden, die jeden Datenpunkt als N-Datenpunkt klassifiziert.

In einem dritten Schritt können M1 und M2 parallel auf einen unbekannten (zu Klassifizierenden) Datensatz angewandt werden. Für jeden Datenpunkt des unbekannten Datensatzes können M1 und M2 jeweils eine unabhängige Klassifizierung (N oder F) liefern. Die Anzahl der voneinander abweichenden Ergebnisse, d.h. wo Klassifizierung durch M1 ≠ Klassifizierung durch M2, wird ermittelt.

In einem vierten Schritt können, sobald die Anzahl der voneinander abweichenden Ergebnisse eine gewisse, vorgegebene Grenze überschritten haben, diese Ergebnisse mit der tatsächlichen Klassifizierung (E), beispielsweise durch einen Experten, Nutzer des Systems oder aus einer sonstigen Quelle, verglichen werden. Anschließend können M1 und M2 in folgender Weise angepasst werden:
Falls die Anzahl der Ergebnisse mit (M1=F,M2=N,E=N) eine gegebene Anzahl übersteigt, kann M1 angepasst werden (Trainingsdatensatz wird angepasst), d.h. eine geg. Anzahl zufällig gezogener Datenpunkte aus dem Trainingsdatensatz für M1 kann durch die entsprechende Anzahl zufällig gewählter Datenpunkte aus den (M1=F,M2=N,E=N)-Ergebnissen ersetzt werden.

Falls die Anzahl der Ergebnisse mit (M1=F,M2=N,E=F) eine gegebene Anzahl übersteigt, kann M2 angepasst werden (Trainingsdatensatz wird angepasst), d.h. eine geg. Anzahl zufällig gezogener Datenpunkte aus den F-Daten des Trainingsdatensatzes für M2 kann durch die entsprechende Anzahl zufällig gewählter Datenpunkte aus den (M1=F,M2=N, E=F)-Ergebnissen ersetzt werden. Falls der Trainingsdatensatz für M2 bisher nur N-Daten enthält, kann eine geg. Anzahl zufällig gewählter Datenpunkte aus den (M1=F,M2=N,E=F)-Ergebnissen zum bestehenden Trainingsdatensatz für M2 hinzugefügt werden.

Falls die Anzahl der Ergebnisse mit (M1=N,M2=F,E=N) eine gegebene Anzahl übersteigt, kann M2 angepasst werden (Trainingsdatensatz wird angepasst), d.h. eine geg. Anzahl zufällig gezogener Datenpunkte aus den N-Daten des Trainingsdatensatzes für M2 wird durch die entsprechende Anzahl zufällig gewählter Datenpunkte aus den (M1=N,M2=F,E=N)-Ergebnissen ersetzt. Falls der Trainingsdatensatz für M2 bisher noch nicht existiert, kann eine geg. Anzahl zufällig gewählter Datenpunkte aus den (M1=N,M2=F,E=N)-Ergebnissen als initialer Trainingsdatensatz für M2 verwendet werden .

Falls die Anzahl der Ergebnisse mit (M1=N,M2=F,E=F) eine gegebene Anzahl übersteigt, kann M1 angepasst werden (Parameter werden angepasst), d.h. eine geg. Anzahl zufällig gezogener Datenpunkte aus den F-Daten des Testdatensatzes für M1 kann durch die entsprechende Anzahl zufällig gewählter Datenpunkte aus den (M1=N,M2=F,E=F)-Ergebnissen ersetzt werden. Falls der Testdatensatz für M1 bisher noch nicht existiert, kann eine geg. Anzahl zufällig gewählter Datenpunkte aus den (M1=N,M2=F,E=F)-Ergebnissen als initialer Testdatensatz für M1 verwendet werden. Die optimalen Parameter können mittels Kreuzvalidierung unter Einbeziehung des Testdatensatzes ermittelt werden.

In einem fünften Schritt können M1 und M2 auf neuen Trainingsdatensätzen, bzw. mit neuen Parametern trainiert werden.

In einem sechsten Schritt werden die Schritte drei bis sechs wiederholt.

Fig. 4 zeigt eine schematische Ansicht eines Klassifizierungsprozessors 200 zum Klassifizieren einer Information in eine erste Klasse oder eine zweite Klasse, gemäß einem Ausführungsbeispiel der vorliegenden Erfindung. Der Klassifizierungsprozessor 200 umfasst zwei parallele Klassifizierungsstufen 202 und 204 und eine Aktualisierungsstufe 206. Eine erste Klassifizierungsstufe 202 der zwei Klassifizierungsstufen 202 und 204 ist ausgebildet, um die Information der ersten Klasse zuzuordnen, wenn die Information Klassifizierungskriterien der ersten Klasse erfüllt, und um die Information der zweiten Klasse zuzuordnen, wenn die Information die Klassifizierungskriterien der ersten Klasse nicht erfüllt. Eine zweite Klassifizierungsstufe 204 der zwei Klassifizierungsstufen 202 und 204 ist ausgebildet, um die Information der zweiten Klasse zuzuordnen, wenn die Information Klassifizierungskriterien der zweiten Klasse erfüllt, und um die Information der ersten Klasse zuzuordnen, wenn die Information die Klassifizierungskriterien der zweiten Klasse nicht erfüllt, wobei die erste Klasse und die zweite Klasse unterschiedlich sind. Die Aktualisierungsstufe ist ausgebildet, um die Klassifizierungskriterien zumindest einer der beiden Klassifizierungsstufen bei einer voneinander abweichenden Zuordnung der Information durch die beiden Klassifizierungsstufen oder bei Erreichen einer vorgegebenen Anzahl von voneinander abweichenden Zuordnungen von Informationen durch die beiden Klassifizierungsstufen zu aktualisieren.

Ausführungsbeispiele schaffen durch die Kombination unterschiedlicher, komplementärer Methoden ein Klassifizierungsverfahren (oder Klassifizierungsprozessor bzw. Klassifikator) mit einer hohen Robustheit und Genauigkeit. Ferner erlaubt das kontinuierliche Feed-Back eine stetige Verbesserung der Genauigkeit im Laufe der Anwendung und eine Anpassung an veränderte äußere Gegebenheiten, bzw. eine Detektion neu auftretender Fehler. Der maßgebliche Vorteil der Verwendung einer Kombination aus zwei komplementären Methoden besteht darin, dass der Anteil notwendiger Feed-Back-Operationen, im Vergleich zu einer einzigen Methode, geringer ist und im Laufe der Anwendung abnimmt.

Ausführungsbeispiele der vorliegenden Erfindung können für die Spam-Filterung, Tumor-Erkennung, Identifikation von Kreditkartenbetrug und Fehlererkennung in technischen Anlagen verwendet werden.

Bei Ausführungsbeispielen kann die Information, die durch das Verfahren 100 klassifiziert wird, Sensordaten (oder Sensorwerte), z.B. eines Satzes von Sensordaten (oder Sensorwerte), sein.

Bei Ausführungsbeispielen können die Sensordaten von einem oder mehreren externen Sensoren (z.B. einer technischen Anlage) erfasst werden.

Bei Ausführungsbeispielen können die Sensordaten beispielsweise Temperaturen, Drücke, Volumenströme, oder Stellsignale sein.

Bei Ausführungsbeispielen kann ein erstes Signal ausgegeben werden, wenn die Information durch beide Klassifizierungsmethoden der ersten Klasse zugeordnet wurde. Beispielsweise kann die Information der ersten Klasse normale Information sein (z.B. Sensordaten (oder Sensormesswerte), die innerhalb eines vorgegebenen Sensordatenbereichs (oder Sollmesswertbereichs) liegen), wobei das erste Signal einen ordnungsgemäßen Betriebszustand (z.B. der technischen Anlage) anzeigen kann).

Bei Ausführungsbeispielen kann ein zweites Signal ausgegeben werden, wenn die Information durch beide Klassifizierungsmethoden der zweiten Klasse zugeordnet wurde. Beispielsweise kann die Information der zweiten Klasse fehlerhafte Information sein (z.B. Sensordaten (oder Sensormesswerte), die außerhalb eines vorgegebenen Sensordatenbereichs (oder Sollmesswertbereichs) liegen), wobei das zweite Signal einen fehlerhaften Betriebszustand (z.B. der technischen Anlage) anzeigen kann).

Bei Ausführungsbeispielen kann ein drittes Signal ausgeben werden, wenn die Information durch die Klassifizierungsmethoden unterschiedlichen Klassen zugeordnet wurde.

Bei Ausführungsbeispielen kann das Verfahren genutzt werden, um Fehler in technischen Anlagen (z.B. haustechnische Anlagen) zu erkennen und zu melden.

Bei Ausführungsbeispielen können Zeitreihendaten von Sensoren (beispielsweise Temperaturen, Drücke, Volumenströme, Stellsignale) als Eingangsdaten für das Verfahren verwendet werden.

Bei Ausführungsbeispielen können alle oder ausgewählte Sensordaten, die einem Zeitpunkt zugeordnet sind, als ein Datenpunkt angesehen werden.

Bei Ausführungsbeispielen kann jeder Datenpunkt durch das Verfahren als Normal, als Fehler oder als Unbekannt klassifiziert werden.

Bei Ausführungsbeispielen kann die Klassifikation eines Datenpunktes als Fehler auf Fehler im Betrieb der technischen Anlagen hinweisen, so dass diese behoben werden können.

Bei Ausführungsbeispielen kann die Klassifizierung als Unbekannt dann auftreten, wenn die dem Verfahren zugrundeliegenden komplementären Methoden unterschiedliche Klassifizierungen vorschlagen.

Bei Ausführungsbeispielen können Datenpunkte mit Klassifizierung Unbekannt unter Verwendung weiterer (externer) Information, wie z.B. Kenntnis über eine tatsächliche Klassenzuordnung, klassifiziert werden.

Bei Ausführungsbeispielen kann die tatsächliche Klassifizierung genutzt werden, um die dem Verfahren zugrundeliegenden Methoden zu aktualisieren und somit zu verbessern. Beispielsweise kann die Information über die tatsächliche Klassifizierung von einem Benutzer (z.B. Facility Manager) bereitgestellt werden. Es sei jedoch darauf hingewiesen, dass das Aktualisieren der Klassifizierungskriterien durch einen Algorithmus erfolgt und nicht durch den Benutzer.

Bei Ausführungsbeispielen kann sich die Anzahl der als Unbekannt klassifizierten Datenpunkte im Laufe der Anwendung reduzieren, wobei die Anzahl der falsch klassifizierten Datenpunkte ebenfalls sinkt.

Bei Ausführungsbeispielen ermöglicht das Verfahren eine Anpassung der Klassifikation an sich ändernde Rahmenbedingungen (z.B. Umstellung von Heizbetrieb auf Kühlbetrieb) und das Erkennen neuartiger Fehlertypen.

Bei Ausführungsbeispielen kann ein Datenpunkt der Klasse Unbekannt ohne weiterer (externer) Information (z.B. durch einen Benutzer) entweder immer als Fehler oder immer als Normal betrachtet werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder eine elektronische Schaltung ausgeführt werden. Bei einigen Ausführungsbeispielen können einige oder mehrere der wichtigsten Verfahrensschritte durch einen solchen Apparat ausgeführt werden.

Ein erfindungsgemäß codiertes Signal, wie beispielsweise ein Audiosignal oder ein Videosignal oder ein Transportstromsignal, kann auf einem digitalen Speichermedium gespeichert sein oder kann auf einem Übertragungsmedium wie beispielsweise einem drahtlosen Übertragungsmedium oder einem verdrahteten Übertragungsmedium, z.B. dem Internet, übertragen werden

Das erfindungsgemäße kodierte Audiosignal kann auf einem digitalen Speichermedium gespeichert sein, oder kann auf einem Übertragungsmedium, wie beispielsweise einem drahtlosen Übertragungsmedium oder einem drahtgebundenen Übertragungsmedium, wie beispielsweise dem Internet, übertragen werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger, das digitale Speichermedium oder das computerlesbare Medium sind typischerweise gegenständlich und/oder nichtvergänglich bzw. nichtvorübergehend.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die hierin beschriebenen Vorrichtungen können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Vorrichtungen, oder jedwede Komponenten der hierin beschriebenen Vorrichtungen können zumindest teilweise in Hardware und/oder in Software (Computerprogramm) implementiert sein.

Die hierin beschriebenen Verfahren können beispielsweise unter Verwendung eines Hardware-Apparats, oder unter Verwendung eines Computers, oder unter Verwendung einer Kombination eines Hardware-Apparats und eines Computers implementiert werden.

Die hierin beschriebenen Verfahren, oder jedwede Komponenten der hierin beschriebenen Verfahren können zumindest teilweise durch Hardware und/oder durch Software ausgeführt werden.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Computer-implementiertes Verfahren (100) zum Klassifizieren von Information in eine erste Klasse oder eine zweite Klasse, wobei das Verfahren (100) aufweist:
Anwenden (102) einer ersten Klassifizierungsmethode (M1) auf die Information um die Information der ersten Klasse zuzuordnen, wenn die Information Klassifizierungskriterien der ersten Klasse erfüllt, und um die Information der zweiten Klasse zuzuordnen, wenn die Information die Klassifizierungskriterien der ersten Klasse nicht erfüllt;
Anwenden (104) einer zweiten Klassifizierungsmethode (M2) auf die Information um die Information der zweiten Klasse zuzuordnen, wenn die Information Klassifizierungskriterien der zweiten Klasse erfüllt, und um die Information der ersten Klasse zuzuordnen, wenn die Information die Klassifizierungskriterien der zweiten Klasse nicht erfüllt; und
Aktualisieren (106) der Klassifizierungskriterien zumindest einer der beiden Klassifizierungsmethoden bei einer voneinander abweichenden Zuordnung der Information durch die beiden Klassifizierungsmethoden oder bei Erreichen einer vorgegebenen Anzahl von voneinander abweichenden Zuordnungen von Informationen durch die beiden Klassifizierungsmethoden (M1,M2);
wobei die erste Klasse und die zweite Klasse unterschiedlich sind;
wobei das Verfahren (100) zur Fehlererkennung in technischen Anlagen verwendet wird;
wobei die Information, die durch das Verfahren (100) klassifiziert sind, Sensordaten sind;
wobei das Verfahren (100) ferner aufweist:
Ausgeben eines ersten Signals, wenn die Information durch beide Klassifizierungsmethoden der ersten Klasse zugeordnet wurde;
Ausgeben eines zweiten Signals, wenn die Information durch beide Klassifizierungsmethoden der zweiten Klasse zugeordnet wurde; und
Ausgeben eines dritten Signals, wenn die Information durch die Klassifizierungsmethoden unterschiedlichen Klassen zugeordnet wurde.

2. Computer-implementiertes Verfahren nach Anspruch 1,
wobei das erste Signal einen ordnungsgemäßen Betriebszustand der technischen Anlage anzeigt;
wobei das zweite Signal einen fehlerhaften Betriebszustand der technischen Anlage anzeigt.

3. Computer-implementiertes Verfahren (100) nach einem der Ansprüche 1 bis 2, wobei die erste Klassifizierungsmethode (M1) und die zweite Klassifizierungsmethode (M2) komplementär zueinander sind.

4. Computer-implementiertes Verfahren (100) nach einem der Ansprüche 1 bis 3, wobei zumindest eine der beiden Klassifizierungsmethoden (M1,M2) unter Verwendung einer Kenntnis über eine tatsächliche Klassenzuordnung der Information aktualisiert wird.

5. Computer-implementiertes Verfahren (100) nach einem der Ansprüche 1 bis 4, wobei die Information Daten sind; oder wobei die Information Daten eines Datensatzes (120) sind, wobei die Daten des Datensatzes (120) einzeln durch das Verfahren (100) klassifiziert werden.

6. Computer-implementiertes Verfahren (100) nach einem der Ansprüche 1 bis 5, wobei die erste Klassifizierungsmethode (M1) eine Ausreißererkennungsmethode ist.

7. Computer-implementiertes Verfahren (100) nach Anspruch 6, wobei das Verfahren (100) aufweist:
Initialisieren der erste Klassifizierungsmethode (M1) in einer Initialisierungsphase ausschließlich mit Informationen der ersten Klasse.

8. Computer-implementiertes Verfahren (100) nach einem der Ansprüche 1 bis 7, wobei die zweite Klassifizierungsmethode (M2) eine regelbasierte Methode ist.

9. Computer-implementiertes Verfahren (100) nach Anspruch 8, wobei das Verfahren (100) aufweist:
Initialisieren der zweiten Klassifizierungsmethode (M2) in einer Initialisierungsphase ausschließlich mit Informationen der zweiten Klasse oder mit Klassifizierungskriterien, die ausschließlich auf bekannten Klassifizierungsinformationen der zweiten Klasse basieren.

10. Computer-implementiertes Verfahren (100) nach einem der Ansprüche 1 bis 9, wobei in einer Trainingsphase nach einer Initialisierungsphase zumindest ein Teil eines zum Trainieren der ersten Klassifizierungsmethode (M1) verwendeter Satz von Trainingsinformationen ausgetauscht wird, wenn eine vorgegebene Anzahl von Informationen die tatsächlich der ersten Klasse zugeordnet werden sollten, von der zweiten Klassifizierungsmethode (M2) korrekt der ersten Klasse zugeordnet wurden, von der ersten Klassifizierungsmethode (M1) jedoch fälschlicherweise der zweiten Klasse zugeordnet wurden, um die Klassifizierungskriterien der ersten Klassifizierungsmethode (M1) durch erneutes Anwenden der ersten Klassifizierungsmethode (M1) auf den ausgetauschten Satz von Trainingsinformationen zu aktualisieren.

11. Computer-implementiertes Verfahren (100) nach einem der Ansprüche 1 bis 10, wobei in einer Trainingsphase nach einer Initialisierungsphase zumindest ein Teil eines zum Trainieren der zweiten Klassifizierungsmethode (M2) verwendeter Satz von Trainingsinformationen der zweiten Klasse ausgetauscht wird, wenn eine vorgegebene Anzahl von Informationen die tatsächlich der zweiten Klasse zugeordnet werden sollten, von der ersten Klassifizierungsmethode (M1) korrekt der zweiten Klasse zugeordnet wurden, von der zweiten Klassifizierungsmethode (M2) jedoch fälschlicherweise der ersten Klasse zugeordnet wurden, um die Klassifizierungskriterien der zweiten Klassifizierungsmethode (M2) durch erneutes Anwenden der zweiten Klassifizierungsmethode (M2) auf den ausgetauschten Satz von Trainingsinformationen zu aktualisieren.

12. Computer-implementiertes Verfahren (100) nach einem der Ansprüche 1 bis 11, wobei in einer Trainingsphase nach einer Initialisierungsphase zumindest ein Teil eines zum Trainieren der zweiten Klassifizierungsmethode (M2) verwendeter Satz von Trainingsinformationen der ersten Klasse ausgetauscht wird, wenn eine vorgegebene Anzahl von Informationen die tatsächlich der ersten Klasse zugeordnet werden sollten, von der ersten Klassifizierungsmethode (M1) korrekt der ersten Klasse zugeordnet wurden, von der zweiten Klassifizierungsmethode (M2) jedoch fälschlicherweise der zweiten Klasse zugeordnet wurden, um die Klassifizierungskriterien der zweiten Klassifizierungsmethode (M2) durch erneutes Anwenden der zweiten Klassifizierungsmethode (M2) auf den ausgetauschten Satz von Trainingsinformationen zu aktualisieren.

13. Computer-implementiertes Verfahren nach einem der Ansprüche 1 bis 12, wobei in einer Trainingsphase nach einer Initialisierungsphase zumindest ein Teil eines zum Trainieren der ersten Klassifizierungsmethode (M1) verwendeter Satz von Trainingsinformationen ausgetauscht werden, wenn eine vorgegebene Anzahl von Informationen die tatsächlich der zweiten Klasse zugeordnet werden sollten, von der zweiten Klassifizierungsmethode (M2) korrekt der zweiten Klasse zugeordnet wurden, von der ersten Klassifizierungsmethode (M1) jedoch fälschlicherweise der ersten Klasse zugeordnet wurden, um die Klassifizierungskriterien der ersten Klassifizierungsmethode (M1) durch erneutes Trainieren der ersten Klassifizierungsmethode (M1) mit Hilfe des aktualisierten Testdatensatzes zu aktualisieren.

14. Klassifizierungsprozessor (200) zum Klassifizieren einer Information in eine erste Klasse oder eine zweite Klasse, wobei der Klassifizierungsprozessor (200) aufweist:
zwei parallele Klassifizierungsstufen (202,204), wobei eine erste Klassifizierungsstufe (202) der zwei Klassifizierungsstufen (202,204) ausgebildet ist, um die Information der ersten Klasse zuzuordnen, wenn die Information Klassifizierungskriterien der ersten Klasse erfüllt, und um die Information der zweiten Klasse zuzuordnen, wenn die Information die Klassifizierungskriterien der ersten Klasse nicht erfüllt, wobei eine zweite Klassifizierungsstufe (204) der zwei Klassifizierungsstufen (202,204) ausgebildet ist, um die Information der zweiten Klasse zuzuordnen, wenn die Information Klassifizierungskriterien der zweiten Klasse erfüllt, und um die Information der ersten Klasse zuzuordnen, wenn die Information die Klassifizierungskriterien der zweiten Klasse nicht erfüllt, wobei die erste Klasse und die zweite Klasse unterschiedlich sind; und
eine Aktualisierungsstufe (206), die ausgebildet ist, um die Klassifizierungskriterien zumindest einer der beiden Klassifizierungsstufen (202,204) bei einer voneinander abweichenden Zuordnung der Information durch die beiden Klassifizierungsstufen oder bei Erreichen einer vorgegebenen Anzahl von voneinander abweichenden Zuordnungen von Informationen durch die beiden Klassifizierungsstufen zu aktualisieren;
wobei die Information, die durch den Klassifizierungsprozessor (200) klassifiziert werden, Sensordaten sind;
wobei der Klassifizierungsprozessor (200) ausgebildet ist, um ein erstes Signal auszugeben, wenn die Information durch die beiden Klassifizierungsstufen (202,204) der ersten Klasse zugeordnet wurde;
wobei der Klassifizierungsprozessor (200) ausgebildet ist, um ein zweites Signal auszugeben, wenn die Information durch die beiden Klassifizierungsstufen (202,204) der zweiten Klasse zugeordnet wurde; und
wobei der Klassifizierungsprozessor (200) ausgebildet ist, um ein drittes Signal auszugeben, wenn die Information durch die beiden Klassifizierungsstufen (202,204) unterschiedlichen Klassen zugeordnet wurde.

15. Klassifizierungsprozessor (200) nach Anspruch 14, wobei der Klassifizierungsprozessor zur Fehlererkennung in technischen Anlagen verwendet wird.

## Claims

1. Computer-implemented method (100) of classifying information into a first class or a second class, the method (100) comprising:
applying (102) a first classification technique (M1) to the information so as to assign the information to the first class if the information meets classification criteria of the first class, and to assign the information to the second class if the information does not meet the classification criteria of the first class;
applying (104) a second classification technique (M2) to the information so as to assign the information to the second class if the information meets classification criteria of the second class, and to assign the information to the first class if the information does not meet the classification criteria of the second class; and
updating (106) the classification criteria of at least one of the two classification techniques in the event that the assignments of the information that are performed by the two classification techniques deviate from each other or in the event that a predefined number of mutually deviating assignments of information by the two classification techniques (M1,M2) has been reached;
wherein the first class and the second class differ from each other;
wherein the method (100) is used for error detection in technical plants;
wherein the information classified by the method (100) is sensor data;
wherein the method (100) further comprises:
outputting a first signal if the information has been assigned to the first class by both classification techniques;
outputting a second signal if the information has been assigned to the second class by both classification techniques; and
outputting a third signal if the information has been assigned to different classes by the classification techniques.

2. Computer-implemented method as claimed in claim 1,
wherein the first signal indicates a proper state of operation of the technical plant;
wherein the second signal indicates a faulty state of operation of the technical plant.

3. Computer-implemented method (100) as claimed in any of claims 1 to 2, wherein the first classification technique (M1) and the second classification technique (M2) are mutually complementary.

4. Computer-implemented method (100) as claimed in any of claims 1 to 3, wherein at least one of the two classification techniques (M1,M2) is updated while using knowledge about actual class assignment of the information.

5. Computer-implemented method (100) as claimed in any of claims 1 to 4, wherein the information is data; or wherein the information is data of a data set (120), the data of the data set (120) being individually classified by the method (100).

6. Computer-implemented method (100) as claimed in any of claims 1 to 5, wherein the first classification technique (M1) is an outlier detection technique.

7. Computer-implemented method (100) as claimed in claim 6, the method (100) comprising:
initializing the first classification technique (M1) exclusively with information of the first class during an initialization phase.

8. Computer-implemented method (100) as claimed in any of claims 1 to 7, wherein the second classification technique (M2) is a rule-based technique.

9. Computer-implemented method (100) as claimed in claim 8, the method (100) comprising:
initializing, during an initialization phase, the second classification technique (M2) exclusively with information of the second class or with classification criteria based exclusively on known classification information of the second class.

10. Computer-implemented method (100) as claimed in any of claims 1 to 9, wherein during a training phase following an initialization phase, at least some of a set of training information that is used for training the first classification technique (M1) is replaced if a predefined number of information which in actual fact should be assigned to the first class have been correctly assigned to the first class by the second classification technique (M2) but have been erroneously assigned to the second class by the first classification technique (M1), so as to update the classification criteria of the first classification technique (M1) by renewed application of the first classification technique (M1) to the replaced set of training information.

11. Computer-implemented method (100) as claimed in any of claims 1 to 10, wherein during a training phase following an initialization phase, at least some of a set of training information of the second class that is used for training the second classification technique (M2) is replaced if a predefined number of information which in actual fact should be assigned to the second class have been correctly assigned to the second class by the first classification technique (M1) but have been erroneously assigned to the first class by the second classification technique (M2), so as to update the classification criteria of the second classification technique (M2) by renewed application of the second classification technique (M2) to the replaced set of training information.

12. Computer-implemented method (100) as claimed in any of claims 1 to 11, wherein during a training phase following an initialization phase, at least some of a set of training information of the first class that is used for training the second classification technique (M2) is replaced if a predefined number of information which in actual fact should be assigned to the first class have been correctly assigned to the first class by the first classification technique (M1) but have been erroneously assigned to the second class by the second classification technique (M2), so as to update the classification criteria of the second classification technique (M2) by renewed application of the second classification technique (M2) to the replaced set of training information.

13. Computer-Implemented method as claimed in any of claims 1 to 12, wherein during a training phase following an initialization phase, at least some of a set of training information that is used for training the first classification technique (M1) is replaced if a predefined number of information which in actual fact should be assigned to the second class have been correctly assigned to the second class by the second classification technique (M2) but have been erroneously assigned to the first class by the first classification technique (M1), so as to update the classification criteria of the first classification technique (M1) by renewed training of the first classification technique (M1) with the aid of the updated set of test data.

14. Classification processor (200) for classifying information into a first class or a second class, the classification processor (200) comprising:
two parallel classification stages (202,204), a first classification stage (202) of the two classification stages (202,204) being configured to assign the information to the first class if the information meets classification criteria of the first class, and to assign the information to the second class if the information does not meet the classification criteria of the first class, a second classification stage (204) of the two classification stages (202,204) being configured to assign the information to the second class if the information meets classification criteria of the second class, and to assign the information to the first class if the information does not meet the classification criteria of the second class, the first class and the second class being different from each other; and
an updating stage (206) configured to update the classification criteria at least of one of the two classification stages (202,204) in the event that the assignments of the information that are performed by the two classification stages deviate from each other or in the event that a predefined number of mutually deviating assignments of information by the two classification stages has been reached,
wherein the information classified by the classification processor (200) is sensor data;
wherein the classification processor (200) is configured to output a first signal if the information has been assigned to the first class by both classification stages (202,204);
wherein the classification processor (200) is configured to output a second signal if the information has been assigned to the second class by both classification stages (202,204); and
wherein the classification processor (200) is configured to output a third signal if the information has been assigned to different classes by both classification stages (202,204).

15. Classification processor (200) as claimed in claim 14, the classification processor being used for error detection in technical plants.

## Revendications

1. Procédé mis en œuvre par ordinateur (100) pour classifier une information dans une première classe ou dans une deuxième classe, le procédé (100) présentant le fait de:
appliquer (102) une première méthode de classification (M1) à l'information pour attribuer l'information à la première classe lorsque l'information remplit les critères de classification de la première classe, et pour attribuer l'information à la deuxième classe lorsque l'information ne remplit pas les critères de classification de la première classe;
appliquer (104) une deuxième méthode de classification (M2) à l'information pour attribuer l'information à la deuxième classe lorsque l'information remplit les critères de classification de la deuxième classe, et pour attribuer l'information à la première classe lorsque l'information ne remplit pas les critères de classification de la deuxième classe; et
mettre à jour (106) les critères de classification d'au moins l'une des deux méthodes de classification en cas d'attributions différant l'une de l'autre de l'information par les deux méthodes de classification ou au cas où est atteint un nombre prédéterminé d'attributions d'informations différentes l'une de l'autre par les deux méthodes de classification (M1, M2);
dans lequel la première classe et la deuxième classe sont différentes;
le procédé (100) étant utilisé pour la détection d'erreurs dans des installations techniques;
dans lequel les informations qui sont classifiées par le procédé (100) sont des données de capteur;
le procédé (100) présentant par ailleurs le fait de:
sortir un premier signal lorsque l'information a été attribuée à la première classe par les deux méthodes de classification;
sortir un deuxième signal lorsque l'information a été attribuée à la deuxième classe par les deux méthodes de classification; et
sortir un troisième signal lorsque l'information a été attribuée à différentes classes par les méthodes de classification.

2. Procédé mis en œuvre par ordinateur selon la revendication 1,
dans lequel le premier signal indique un état de fonctionnement correct de l'installation technique;
dans lequel le deuxième signal indique un état de fonctionnement défectueux de l'installation technique.

3. Procédé mis en œuvre par ordinateur (100) selon l'une des revendications 1 à 2, dans lequel la première méthode de classification (M1) et la deuxième méthode de classification (M2) sont complémentaires entre elles.

4. Procédé mis en œuvre par ordinateur (100) selon l'une des revendications 1 à 3, dans lequel au moins l'une des deux méthodes de classification (M1, M2) est mise à jour à l'aide d'une connaissance d'une attribution de classe effective de l'information.

5. Procédé mis en œuvre par ordinateur (100) selon l'une des revendications 1 à 4, dans lequel les informations sont des données; ou dans lequel les informations sont des données d'un ensemble de données (120), dans lequel les données de l'ensemble de données (120) sont classifiées individuellement par le procédé (100).

6. Procédé mis en œuvre par ordinateur (100) selon l'une des revendications 1 à 5, dans lequel la première méthode de classification (M1) est une méthode de détection de valeurs aberrantes.

7. Procédé mis en oeuvre par ordinateur (100) selon la revendication 6, dans lequel le procédé (100) présente le fait de:
initialiser la première méthode de classification (M1) dans une phase d'initialisation exclusivement avec les informations de la première classe.

8. Procédé mis en œuvre par ordinateur (100) selon l'une des revendications 1 à 7, dans lequel la deuxième méthode de classification (M2) est une méthode à base de règles.

9. Procédé mis en œuvre par ordinateur (100) selon la revendication 8, dans lequel le procédé (100) présente le fait de:
initialiser la deuxième méthode de classification (M2) dans une phase d'initialisation exclusivement par des informations de la deuxième classe ou par des critères de classification qui sont basés exclusivement sur des informations de classification connues de la deuxième classe.

10. Procédé mis en œuvre par ordinateur (100) selon l'une des revendications 1 à 9, dans lequel est échangée, dans une phase d'apprentissage après une phase d'initialisation, au moins une partie d'un ensemble d'informations d'apprentissage utilisées pour l'apprentissage de la première méthode de classification (M1) lorsqu'un nombre prédéterminé d'informations qui devraient effectivement être attribuées à la première classe ont été attribuées de manière correcte à la première classe par la deuxième méthode de classification (M2), mais ont toutefois été attribuées de manière erronée à la deuxième classe par la première méthode de classification (M1), pour mettre à jour les critères de classification de la première méthode de classification (M1) en appliquant à nouveau la première méthode de classification (M1) à l'ensemble d'informations d'apprentissage échangé.

11. Procédé mis en œuvre par ordinateur (100) selon l'une des revendications 1 à 10, dans lequel est échangée, dans une phase d'apprentissage après une phase d'initialisation, au moins une partie d'un ensemble d'informations d'apprentissage de la deuxième classe utilisées pour l'apprentissage de la deuxième méthode de classification (M2) lorsqu'un nombre prédéterminé d'informations qui devraient effectivement être attribuées à la deuxième classe ont été attribuées de manière correcte à la deuxième classe par la première méthode de classification (M1), mais ont toutefois été attribuées de manière erronée à la première classe par la deuxième méthode de classification (M2), pour mettre à jour les critères de classification de la deuxième méthode de classification (M2) en appliquant à nouveau la deuxième méthode de classification (M2) à l'ensemble d'informations d'apprentissage échangé.

12. Procédé mis en oeuvre par ordinateur (100) selon l'une des revendications 1 à 11, dans lequel est échangée, dans une phase d'apprentissage après une phase d'initialisation, au moins une partie d'un ensemble d'informations d'apprentissage de la première classe pour l'apprentissage de la deuxième méthode de classification (M2) lorsqu'un nombre prédéterminé d'informations qui devraient effectivement être attribuées à la première classe ont été attribuées de manière correcte à la première classe par la première méthode de classification (M1), mais ont toutefois été attribuées de manière erronée à la deuxième classe par la deuxième méthode de classification (M2), pour mettre à jour les critères de classification de la deuxième méthode de classification (M2) en appliquant à nouveau la deuxième méthode de classification (M2) à l'ensemble d'informations d'apprentissage échangé.

13. Procédé mis en œuvre par ordinateur selon l'une des revendications 1 à 12, dans lequel est échangée, dans une phase d'apprentissage après une phase d'initialisation, au moins une partie d'un ensemble d'informations d'apprentissage utilisées pour l'apprentissage de la première méthode de classification (M1) lorsqu'un nombre prédéterminé d'informations qui devraient effectivement être attribuées à la deuxième classe ont été attribuées de manière correcte à la deuxième classe par la deuxième méthode de classification (M2), mais ont toutefois été attribuées de manière erronée à la première classe par la première méthode de classification (M1), pour mettre à jour les critères de classification de la première méthode de classification (M1) par un nouvel apprentissage de la première méthode de classification (M1) à l'aide de l'ensemble de données d'essai.

14. Processeur de classification (200) pour classifier une information dans une première classe ou dans une deuxième classe, le processeur de classification (200) présentant:
deux étages de classification parallèles (202, 204), où un premier étage de classification (202) des deux étages de classification (202, 204) est conçu pour attribuer l'information à la première classe lorsque l'information remplit les critères de classification de la première classe et pour attribuer l'information à la deuxième classe lorsque l'information ne remplit pas les critères de classification de la première classe, où un deuxième étage de classification (204) des deux étages de classification (202, 204) est conçu pour attribuer l'information à la deuxième classe lorsque l'information remplit les critères de classification de la deuxième classe, et pour attribuer l'information à la première classe lorsque l'information ne remplit pas les critères de classification de la deuxième classe, où la première classe et la deuxième classe sont différentes; et
un étage de mise à jour (206) qui est conçu pour mettre à jour les critères de classification d'au moins l'un des deux étages de classification (202, 204) en cas d'attributions différant l'une de l'autre de l'information par les deux étages de classification ou au cas où est atteint un nombre prédéterminé d'attributions d'informations différant l'une de l'autre par les deux étages de classification;
dans lequel les informations qui sont classifiées par le processeur de classification (200) sont des données de capteur;
dans lequel le processeur de classification (200) est conçu pour sortir un premier signal lorsque l'information a été attribuée à la première classe par les deux étages de classification (202, 204);
dans lequel le processeur de classification (200) est conçu pour sortir un deuxième signal lorsque l'information a été attribuée à la deuxième classe par les deux étages de classification (202, 204); et
dans lequel le processeur de classification (200) est conçu pour sortir un troisième signal lorsque l'information a été attribuée à différentes classes par les deux étages de classification (202, 204).

15. Processeur de classification (200) selon la revendication 14, dans lequel le processeur de classification est utilisé pour la détection d'erreurs dans les installations techniques.
